# EUROPEAN PATENT SPECIFICATION

(11) **EP 0 482 757 B1**
(45) Date of publication and mention of the grant of the patent: **09.08.1995**
(21) Application number: 91308576.7
(22) Date of filing: 20.09.1991
(51) Int. Cl.: B62B 1/12, A47B 85/06

(54) **Multipurpose device useful as cart or table**
Vielzweckgerät, verwendbar als Schubwagen oder Tisch
Dispositif multifonctionnel utile comme chariot ou table

(30) Priority: 26.09.1990 US 588233
(43) Date of publication of application: 29.04.1992
(73) Proprietor: BSP CORPORATION, Savannah, Georgia 31406 (US)
(72) Inventor: Bono, Julian M., Savannah, Georgia 31406 (US); Hoffman, Jonathan, Savannah, Georgia 31406 (US)
(74) Representative: Shaw, Laurence

(56) References cited:
- EP-A- 0 412 879
- DE-A- 2 036 021
- GB-A- 672 192
- GB-A- 2 216 073
- US-A- 4 284 286
- US-A- 4 703 944

## Description

The invention relates to a multipurpose device which can be used as a recreational cart or table and which can be folded into the form of a compact case for carrying or storage purposes. More particularly, the invention relates to such a device which can be stored in a compact condition and be used to transport items to a play or recreational area and there be converted into a useful table.

Many forms of foldable table are known. US-A-3677571 and US-A-3758128 discloses a device which can be used as a cart or as a beach chair. US-A-4703944 discloses a device which can be used as a beach caddy or as a table.

It is one object of this invention to provide a device which can be wheeled as a cart over hard or soft surfaces, used as a table and which can be folded into compact form, and which can be readily converted from one mode to another without the need for tools. It is a further object to provide such a device which has high load bearing capacity as a cart or table. It is another object to provide such a device which in any mode can include modifications.

According to the invention there is provided a device as disclosed in claim 1.

Preferably the first body section is connected to a first frame member which is connected to a first pivot and the second body section is connected to a second frame member which is connected to a second pivot a strut member extends from the second pivot to the first pivot.

Preferably the first pivot is coincident with the axle of the wheel means.

Preferably the wheel means comprises a roller adapted for movement over soft surfaces, e.g. sand, snow, or the like.

Preferably the frame members are U-shaped having legs with connecting portions and the free ends of the legs of the first frame member are connected to the first pivot and the legs of the second frame member are connected to the second pivot so that when the first frame member is rotated about the first pivot in one direction and the second frame member is rotated about the pivot in an opposite direction, the body sections are brought towards each other until the respective connecting sections abut to define the compact case.

Preferably a first extendable leg assembly is connected to the first body section, and a second extendable leg assembly is connected to the second body section and when said body sections are rotated about the pivot to lie in a common generally horizontal plane to form a table top the leg assemblies are extended to form the table legs.

Preferably the connecting section of the second frame member is received in the channel of the first body section to form a cart of generally L shape, the second body section defining the load carrying platform and the first body section being substantially the upright.

Preferably the wheel means comprises a first surface means for reducing friction when the cart is rolled over hard surfaces and a second surface means for precluding excessive sinking of the roller into soft surfaces.

Preferably the invention also provides, a cart with a roller for use, being cylindrically shaped and comprising at least three narrow sections and at least two wider concave sections between said narrow sections.

### DESCRIPTION OF THE DRAWING

In order that the invention may be well understood it will now be described by way of example only with reference to the accompanying diagrammatic drawings, wherein:
Figure 1 is an isometric view of a device of the invention in the carrying case mode;
Figure 2 is a cross-sectional view taken along the line 2-2 on Figure 1;
Figure 3 is an isometric view of the device of the invention in the trolley or cart mode;
Figure 4 is a cross-sectional view taken along the line 4-4 on Figure 3;
Figure 5 is a cross-sectional view taken along the line 5-5 on Figure 3;
Figure 6 is an isometric view of the device of the invention in the table mode;
Figure 7 is a cross-sectional view taken along the line 7-7 on Figure 6;
Figure 8 is a bottom plan view, partially in section, of the table of Figures 6 and 7;
Figure 9 is a cross-sectional view taken along the line 9-9 on Figure 6;
Figure 10 is a partial sectional view taken along the line 10-10 on Figure 6;
Figure 11 is a sectional view taken along the line 11-11 on Figure 1; and
Figure 12 is a sectional view of a hinged panel located in one of body sections.

### DETAILED DESCRIPTION OF THE PREFERRED EMBODIMENT

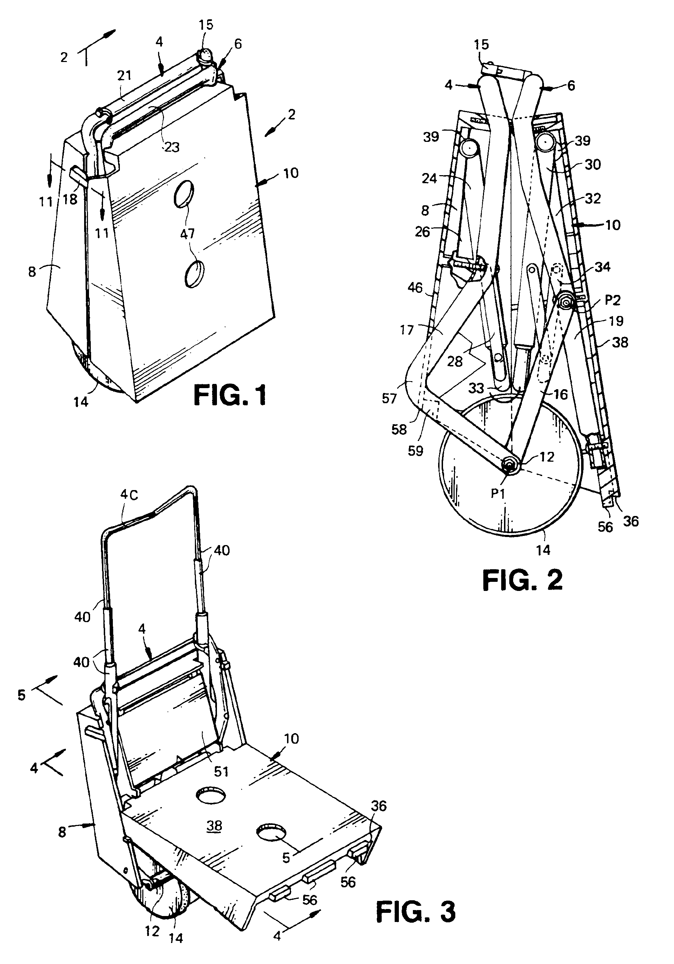

The device 2 includes frame members 4 and 6 which are bolted to body sections 8 and 10 respectively. As can be seen in Figure 2, frame member 4 is pivotally connected to a first pivot P1 coincident with the axle 12 of a roller 14. The frame member 6 is double pivoted, being pivotally connected to a second pivot P2 at one end of strut 16 the other end of which is pivotally connected to the pivot P1 at the axle 12 of the roller 14. The purpose of providing a double pivoting arrangement for frame member 6 will be explained in detail hereinafter.

The frame members 4 and 6 are generally U-shaped, each having two generally U-shaped legs 17 and 19 respectively. Legs 17 of frame member 4 are bridged at one end by connecting section 21 and legs 19 of the frame member 6 are bridged at one end by connecting section 23. The connecting sections 21 and 23 form the handles of the carrying case, as shown in Figure 1. One leg 17 of the frame member 4 is pivotally connected to one side of the roller 14 at the axle 12 while the other leg 17 of the frame member 4 is pivotally connected to the other side of the roller 14 at the axle 12. There are two struts 16, with one strut being connected to one of the legs 19 of the frame member 6 and to one side of the wheel 14 at the axle 12 while the other strut 16 is connected to the other of the legs 19 of the frame member 6 and to the other side of roller 14 at the axle 12. The frame 4 includes a dogleg 57.

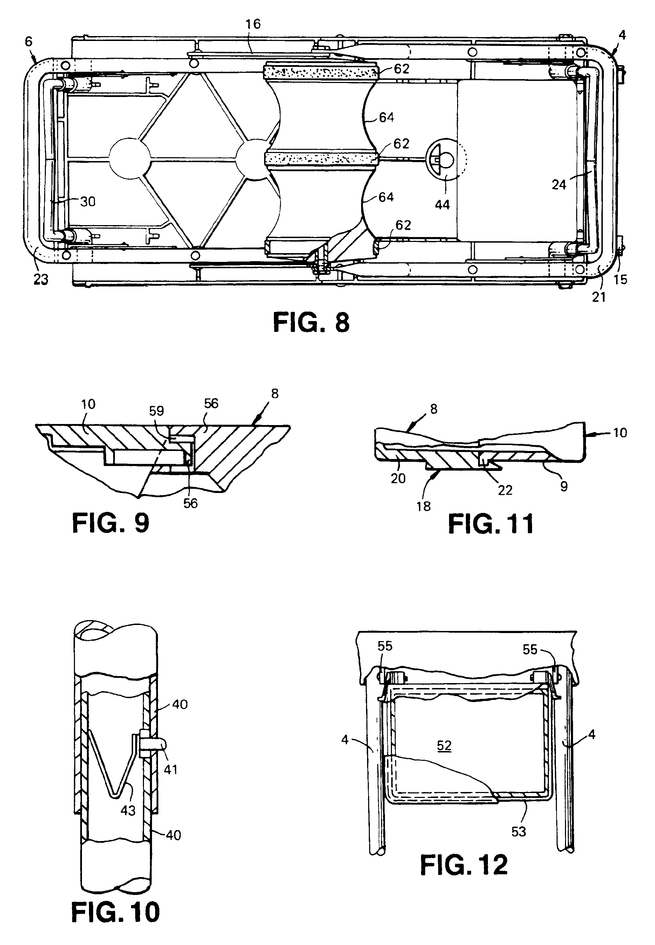

When the frame members 4 and 6 have been rotated about their pivotal connections at the axle 12 to cause the body sections 8 and 10 to abut each other, to the condition shown in Figure 1, the body sections 8 and 10 can be secured by side locking mechanism 18 and top catches 15. A cross-sectional view of the locking mechanism 18 is shown in Figure 11. Hasp 20 of the locking mechanism 18 is attached to the body section 8 and captures ridge 22 of the locking element 9 attached to the body member 10. (A standard luggage locking mechanism may be used instead).

Referring again to Figure 2, an extendable leg assembly 24 is shown contracted and stored within the body section 8. One end of the leg assembly 24 is free to move within channel 26 and the other is connected to the frame member 4 by a hinge 28. A similar extendable leg assembly 30 is present in channel 32 within the body section 10, one end of the extendable leg assembly 30 being free to move within the channel 32 and the other being connected to the frame member 6 by hinge 34.

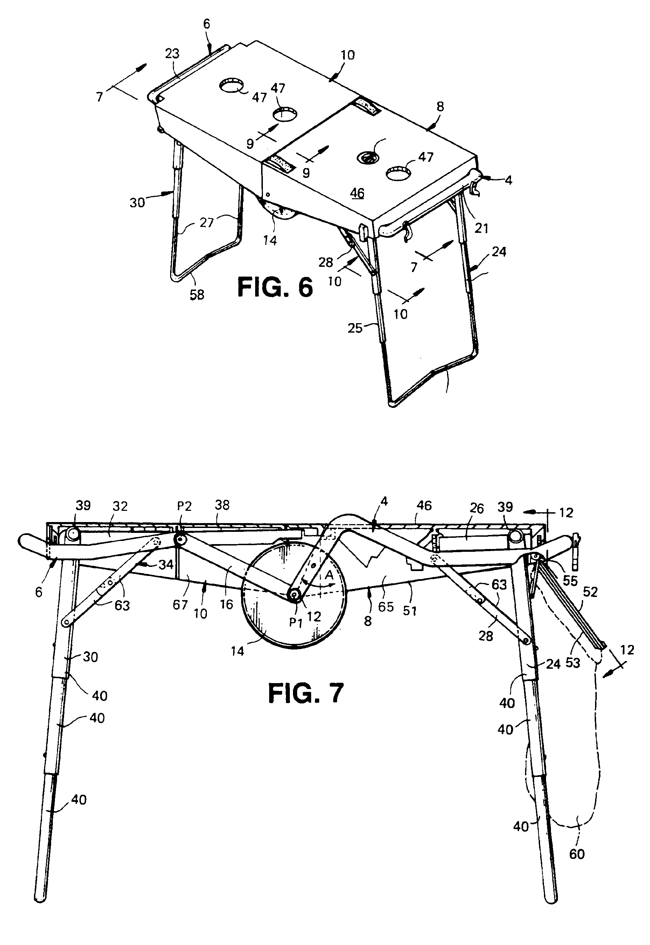

The extendable leg assemblies 24 and 30 are U-shaped, each having two legs 25 and 27 respectively, which are connected by connecting sections 42 and 58 respectively (see Figure 6) at their proximal ends 33, as will be described later. There are thus two hinges 28, one connecting one of the legs 25 of the extendable leg assembly 24 to an associated leg 17 of the frame member 4 and the other hinge 28 connecting the other one of the legs 25 of the extendable leg assembly 24 to the other leg 17 of the frame member 4. Similarly, there are two hinges 34 which connect each of the legs 27 of the extendable leg assembly 30 to its associated leg 19 of the frame member 6. The operation of the extendable leg assemblies 24 and 30 will be explained later.

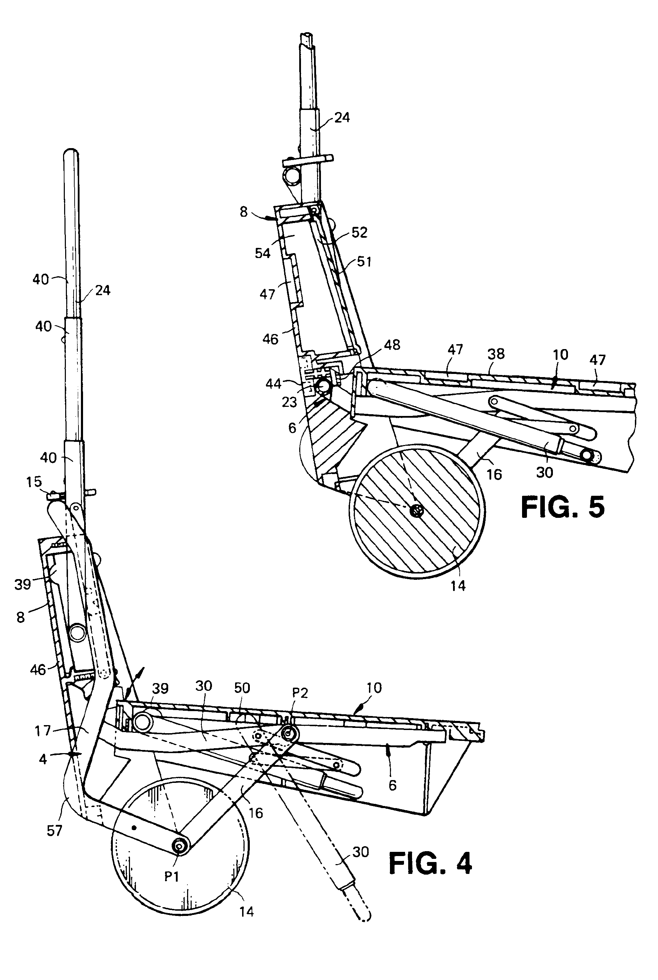

The trolley or cart mode of the device 2, which is shown isometrically in Figure 3, will now be described. Referring again to Figure 2, when the distal end 36 of the body member 10 is moved away from the wheel 14, the body member 10 is rotated about the pivot at one end of the strut 16, and the other end of the strut 16 is rotated about the axle 12 until the outer surface 38 of the body section 10 assumes a generally horizontal position as shown in Figure 3 to be the load bearing surface of the cart. At the same time, the end of the extendable leg assembly 24 which is in the channel 26 of the body section 8 is moved from the detent 39 (Figure 4) of the channel 26 and the extendable leg assembly 24 is rotated upward to provide as the push or pull handle so that the trolley has a generally L shape as seen in side elevation. The telescoping elements 40 of the extendable leg assembly 24 can be extended to a height convenient to the user.

As shown in Figures 4 and 5, the body section 10 is locked in position by rotating a locking knob 44, which is mounted in a recess in the outer surface 46 of the body section 8 to turn a locking tab 48 until it captures the connecting section 23 of the frame member 6 and locks it into position.

The end of the extendable leg assembly 30 in the channel 32 may be moved into detent 50 of the channel 32 and the leg assembly 30 rotated clockwise to form a leg or kickstand for the carrying cart as shown by the dashed lines in Figure 4.

As shown in Figures 4 and 5, the generally triangular arrangement comprising the struts 16, the frame member 4, the frame member 6, the axle 12 and the outer surface 38 of the carrying cart provides strength and stability which increases the load carrying capacity of the cart. The dogleg 57 provides a bumper which protects the cart, particularly the body sections 8 and 10, when the cart is rolled off and onto kerbs or stairs.

The inner surface 51 (Figure 5) of the body member 8 comprises a hinged panel 52 which is connected at pivots 55 to the legs 17 of the frame member 4. The hinged panel 52 allows access to a storage compartment 54 for clothing or other sundry items. A U-shaped frame 53, for holding rubbish bag or trashcan liners, is also pivotally connected to the legs 17 at the pivots 55. (Figure 12 shows a sectional view of the hinged panel 52 and the frame 53).

Figure 6 shows an isometric view of the device 2 in the mode of a table. The frame member 6 shown in Figure 2 is rotated clockwise, which also causes the struts 16 to rotate clockwise, so that the distal end 36 of the body section 10 goes around and under the wheel 14 until it abuts the distal end 58 of the body member 8. A single flat generally horizontal surface is formed comprising the outer surfaces 38 and 46 of the body members 10 and 8 respectively. Indentations 47 in the outer surfaces 38 and 46 are provided for drinking cups. Although in this condition the doglegs 57 extend slightly above the plane of the surfaces 38 and 46, they do not unduly interfere with the use of the table top. The distal end 36 of the body section 10 includes projections 56 which nest into recesses 59 of the body section 8 to form a tight fit (Figure 9). As shown in Figure 7, one end of the leg assemblies 24 and 30 has been received in the detents 39 of the channels 26 and 32 respectively. The legs have been extended by extending their telescoping elements 40, and the legs have been locked into position by extending the links 63 of the hinges 28 and 34 in a known manner. The telescoping elements 40 are locked into position by locking pin 41 which is spring loaded by spring 43 as shown in Figure 10.

The triangular arrangement comprises the body sections 8 and 10, the frame members 4 and 6, and the axle 12 provide strength and stability to the table. Load added to the table surfaces 38 and 46 increases pressure in a direction which urges the body sections 8 and 10 towards each other. The sides 65 and 67 of the body sections 8 and 10 respectively do not abut in a plane perpendicular to the table top formed by the surfaces 38 and 46, but at an angle A (Figure 6) to the perpendicular. Thus, when load is placed on the table top, the body sections 8,10 are forced into tighter wedging engagement. Further stability is provided because of the substantial contact surface with the ground provided by connecting sections 42 and 58 of the leg assemblies 24 and 30. The connecting section 42 and 58 are angled upward. This provides two stable contact points at the ends of each connecting section to prevent rocking on uneven surfaces, with the length of the sections preventing sinking into soft surfaces.

As can be seen from Figure 7, hinged panel 52 on the inner surface 51 has been opened and extended. Trashcan liner 60 is wrapped around the frame 53 associated with the hinged panel 52, to hold trash or waste material during parties or picnics when the table is used. Hinged panel 52 also functions as a lid for the liner 60. The projections 56 of the body section 10 interlock in the recesses 59 of the body section 8, as shown in Figure 9.

As can be seen in Figure 8, the roller 14 comprises a cylinder with three relatively narrow segments 62 upon which treads or rough material are formed, and with two concave relatively wider segments 64 between the narrow segments 62. The roller 14 can traverse hardened surfaces with minimal friction because the rollers only makes contact with the larger diameter narrow segments 62. The roller does not sink into soft surfaces such as sand, dirt or snow because the wider concave sections 64 make contact with such surfaces.

In the preferred embodiment the extendable leg assemblies and the frame members are made of aluminium or other suitable metal. The body sections are fabricated from injection molded plastic material such as LDPE low density polyethylene structural foam.

A multi-purpose device 2 of the invention can perform several functions, as described. For example, if a family wishes to spend a day at the beach, the device 2 may be carried as a compact carrying case in a car. Upon arrival at the beach the device 2 can be easily converted from a compact case to a trolley and loaded with food, clothing and sundry items as desired. The loaded cart can be wheeled onto the beach, the wide concave roller sections 64 preventing the cart from sinking into the sand. Upon arrival at the desired position on the beach, the family can unload the carrying cart and convert the device into a table for card or board games or for consumption of potables and foods. The triangular support systems make both the cart and the table sturdy and enable the carrying of heavy loads by both the cart and the table. Similarly, a family wish to spend the day at the park having a picnic can also use the multi-purpose device to convert in turn from a compact case to a cart and then to a table for having a picnic. The structure of the roller 14 enables easy movement with minimal friction of the cart by providing narrow contact surface for rolling over hard surfaces and a greater contact surface for improved traction over soft surfaces by preventing the cart from sinking into the soft surfaces.

## Claims

1. A device (2) comprising a first body section (8) and a second body section (10); wheel means (14) connected to the body sections (8,10); and a pivot system (P1,P2); the body sections (8,10) being connected to the pivot system and movable rotationally thereabout to cause the device (2) to adopt one of the following modes:
firstly, wherein the body sections (8,10) are abutted together to define a compact case;
secondly, wherein the body sections (8,10) lie in a common generally horizontal plane to define a table; and
thirdly, wherein one body section extends at an angle to the other so that the device is a generally "L" shape with the wheel means (14) thereunder to define a cart
characterised in that the body sections (8,10) are connected to leg means (24,30,40) which are contained within the compact case in the first mode, the leg means being movable to a position in the second mode where they support the table on a supporting surface with the wheel means (14) out of engagement with the supporting surface.

2. A device according to Claim 1, characterised in that the first, second and third modes are each different from each of the other two of the three modes.

3. A device according to Claim 1 or 2, characterised in that the pivot system comprises means for arranging the body sections into the three modes, the means including portions (P2,24,30,17) located within the case in the first mode.

4. A device according to Claim 1,2 or 3, characterised in that the first body section (8) is connected to a first frame member (4) which is connected to a first pivot (P1) and in that the second body section (10) is connected to a second frame member (6) which is connected to a second pivot (P2) and in that a strut member (16) extends from the second pivot (P2) to the first pivot (P1).

5. A device according to Claim 4, characterised in that the first pivot (P1) is coincident with the axle (12) of the wheel means (14).

6. A device according to any preceding Claim, characterised in that the wheel means (14) comprises a roller (14) adapted for movement over soft surfaces, e.g. sand.

7. A device according to Claim 4,5 or 6, characterised in that the first frame member (4) comprises a dogleg (57).

8. A device according to any of Claims 4 to 7, characterised in that each frame member (4,6) is connected to the respective body section (8,10) at a location intermediate the length of the body section.

9. A device according to any of Claims 4 to 8, characterised in that the frame members (4,6) are U-shaped having legs (17,19) respectively with respective connecting portions (21,23) and the free end of the legs (17) of the first frame member (4) are connected to the first pivot (P1) and the free ends of the legs (19) of the second frame member (6) are connected to the second pivot (P2) so that when the first frame member (4) is rotated about the first pivot (P1) in one direction and the second frame member (6) is rotated about the pivot (P1) in an opposite direction, the body sections (8,10) are brought towards each other until the respective connecting sections (21,23) abut to define the compact case.

10. A device according to Claim 9, characterised by a locking element (18) for locking the body sections (8,10) together.

11. A device according to any preceding Claim, characterised in that a first extendable leg assembly (24) is connected to the first body section (8), and a second extendable leg assembly (30) is connected to the second body section (10) and when said body sections (8,10) are rotated about the pivot (P1) to lie in a common generally horizontal plane to form a table top the leg assemblies (24,30) are extended to form the table legs.

12. A device according to Claim 11, characterised by hinges (28) which connect the first extendable leg assembly (24) to the first frame member (4) and hinges (34) which connect the second extendable leg assembly (30) to the second frame member (6).

13. A device according to Claims 11 or 12, characterised in that the first and said second body sections (8,10) include channels (26,32) having a respective detent (39,50) towards one end, the extendable leg assemblies (24,30) being movable in the respective channels (26,32) and to be locked in an extended condition in co-operation with the detents (39,50) and hinges (28,34).

14. A device according to any of Claims 1 to 8 and 11 to 13, characterised in that the body sections (8,10) have sides (65,67) which abut at an angle to the perpendicular to the plane of the table top (38,46) for increased stability.

15. A device according to any of Claims 11 to 14, characterised in that table top is supported by an underlying triangular weight support system comprising the body sections (8,10), the frame members (4,6) the strut (16) and the axle (12).

16. A device according to any of Claims 13 to 15, characterised in that the connecting section (23) of the second frame member (6) is received in the channel (26) of the first body section (8) to form a cart of generally L shape, the second body section (10) defining the load carrying platform (38) and the first body section (8) being substantially upright.

17. A device according to Claim 16, characterised in that the first body section (8) includes a projecting locking knob (44) and tab (48) arranged to engage the connecting section (23) of the frame member (6).

18. A device according to Claim 16 or 17, characterised in that the first leg assembly (24) of the first body section (8) is extended to define a handle for the cart.

19. A device according to Claim 16,17 or 18 characterised in that the second leg assembly (30) is extended in the channel (32) into engagement with a detent (50) to define a kickstand for the cart.

20. A device according to any of Claims 16 to 19, characterised in that the loads on the platform (38) are supported by an underlying weight support system comprising the frame members (4,6), the strut (16) and the axle (12).

21. A device according to any of Claims 16 to 20, characterised in that the wheel means (14) comprises a first surface means (62) for reducing friction when the cart is rolled over hard surfaces and a second surface means (64) for precluding excessive sinking when the cart is rolled over soft surfaces.

22. A device according to Claim 21, characterised in that the roller (14) is cylindrical and the first surface means comprises narrow sections (62) and the second surface means comprises wider concave sections (64) between the narrow sections.

23. A device according to Claim 21 or 22, characterised in that the roller comprises three narrow sections (62) and two wider concave sections (64).

## Patentansprüche

1. Vorrichtung (2), die folgendes umfaßt: einen ersten Körperabschnitt (8) und einen zweiten Körperabschnitt (10); eine mit den Körperabschnitten (8, 10) verbundene Radvorrichtung (14); und ein Drehpunktsystem (P1, P2); wobei die Körperabschnitte (8, 10) mit dem Drehpunktsystem verbunden sind und drehend darum herum bewegbar sind, um zu bewirken, daß die Vorrichtung (2) einen der folgenden Zustände annimmt:
erstens einen Zustand, wobei die Körperabschnitte (8, 10) aneinander anstoßen, um ein kompaktes Gehäuse zu definieren;
zweitens einen Zustand, wobei die Körperabschnitte (8, 10) in einer gemeinsamen, im allgemeinen horizontalen Ebene liegen, um einen Tisch zu definieren; und
drittens einen Zustand, wobei ein Körperabschnitt in einem Winkel zu dem anderen verläuft, so daß die Vorrichtung im allgemeinen "L"-förmig ist, wobei die Radvorrichtung (14) sich darunter befindet, um einen Karren zu bilden;
dadurch gekennzeichnet, daß die Körperabschnitte (8, 10) mit Schenkelvorrichtungen (24, 30, 40) verbunden sind, die innerhalb des kompakten Gehäuses im ersten Zustand enthalten sind, wobei die Schenkelvorrichtungen auf eine Position im zweiten Zustand bewegbar sind, wo sie den Tisch auf einer Auflagefläche tragen, wobei die Radvorrichtungen (14) nicht in die Auflagefläche eingreifen.

2. Vorrichtung nach Anspruch 1, dadurch gekennzeichnet, daß der erste, zweite und dritte Zustand sich jeweils von jedem der anderen beiden der drei Zustände unterscheiden.

3. Vorrichtung nach Anspruch 1 oder 2, dadurch gekennzeichnet, daß das Drehpunktsystem eine Vorrichtung zum Anordnen der Körperabschnitte in die drei Zustände aufweist, wobei die Vorrichtung im ersten Zustand im Gehäuse befindliche Teile (P2, 24, 30, 17) hat.

4. Vorrichtung nach Anspruch 1, 2 oder 3, dadurch gekennzeichnet, daß der erste Körperabschnitt (8) mit einem ersten Rahmenelement (4) verbunden ist, das mit einem ersten Drehpunkt (P1) verbunden ist, und daß der zweite Körperabschnitt (10) mit einem zweiten Rahmenelement (6) verbunden ist, das mit einem zweiten Drehpunkt (P2) verbunden ist, und daß ein Strebenelement (16) vom zweiten Drehpunkt (P2) zum ersten Drehpunkt (P1) verläuft.

5. Vorrichtung nach Anspruch 4, dadurch gekennzeichnet, daß der erste Drehpunkt (P1) mit der Achse (12) der Radvorrichtung (14) zusammenfällt.

6. Vorrichtung nach einem der vorangehenden Ansprüche, dadurch gekennzeichnet, daß die Radvorrichtung (14) eine zur Bewegung über weiche Oberflächen, wie z.B. Sand, angepaßte Rolle (14) aufweist.

7. Vorrichtung nach Anspruch 4, 5 oder 6, dadurch gekennzeichnet, daß das erste Rahmenelement (4) eine Winkelstütze (57) aufweist.

8. Vorrichtung nach einem der Ansprüche 4 bis 7, dadurch gekennzeichnet, daß jedes Rahmenelement (4, 6) an einer zwischengelegenen Stelle an der Länge des Körperabschnitts mit dem jeweiligen Körperabschnitt (8, 10) verbunden ist.

9. Vorrichtung nach einem der Ansprüche 4 bis 8, dadurch gekennzeichnet, daß die Rahmenelemente (4, 6) U-förmig sind und jeweils Schenkel (17, 19) mit jeweiligen Verbindungsteilen (21, 23) haben, und die freien Enden der Schenkel (17) des ersten Rahmenelements (4) mit dem ersten Drehpunkt (P1) verbunden sind und die freien Enden der Schenkel (19) des zweiten Rahmenelements (6) mit dem zweiten Drehpunkt (P2) verbunden sind, so daß, wenn das erste Rahmenelement (4) um den ersten Drehpunkt (P1) in einer Richtung gedreht wird und das zweite Rahmenelement (6) um den Drehpunkt (P1) in einer entgegengesetzten Richtung gedreht wird, die Körperabschnitte (8, 10) aufeinander zu gebracht werden, bis die jeweiligen Verbindungsteile (21, 23) aneinander anstoßen, um das kompakte Gehäuse zu bilden.

10. Vorrichtung nach Anspruch 9, gekennzeichnet durch ein Verriegelungselement (18) zum Verriegeln der Körperabschnitte (8, 10) miteinander.

11. Vorrichtung nach einem der vorangehenden Ansprüche, dadurch gekennzeichnet, daß eine erste ausziehbare Schenkelbaugruppe (24) mit dem ersten Körperabschnitt (8) und eine zweite ausziehbare Schenkelbaugruppe (30) mit dem zweiten Körperabschnitt (10) verbunden ist, und wenn die genannten Körperabschnitte (8, 10) um den Drehpunkt (P1) gedreht werden, um in einer gemeinsamen, im allgemeinen horizontalen Ebene zu liegen, um eine Tischplatte zu formen, die Schenkelbaugruppen (24, 30) ausgezogen werden, um die Tischbeine zu formen.

12. Vorrichtung nach Anspruch 11, gekennzeichnet durch Scharniere (28), die die erste ausziehbare Schenkelbaugruppe (24) mit dem ersten Rahmenelement (4) verbinden, und Scharniere (34), die die zweite ausziehbare Schenkelbaugruppe (30) mit dem zweiten Rahmenelement (6) verbinden.

13. Vorrichtung nach Anspruch 11 oder 12, dadurch gekennzeichnet, daß der erste und der genannte zweite Körperabschnitt (8, 10) Rinnen (26, 32) aufweisen, die zu einem Ende hin jeweils eine Feststellvorrichtung (39, 50) aufweisen, wobei die ausziehbaren Schenkelbaugruppen (24, 30) in den jeweiligen Rinnen (26, 32) bewegbar sind und in einem ausgezogenen Zustand in Zusammenwirkung mit den Feststellvorrichtungen (39, 50) und Scharnieren (28, 34) zu arretieren sind.

14. Vorrichtung nach einem der Ansprüche 1 bis 8 und 11 bis 13, dadurch gekennzeichnet, daß die Körperabschnitte (8, 10) Seiten (65, 67) haben, die für größere Stabilität in einem Winkel zur Senkrechten zur Ebene der Tischplatte (38, 46) aneinander anstoßen.

15. Vorrichtung nach einem der Ansprüche 11 bis 14, dadurch gekennzeichnet, daß die Tischplatte von einem untergelegten dreieckigen Gewichtstragesystem getragen wird, das die Körperabschnitte (8, 10), die Rahmenelemente (4, 6), die Strebe (16) und die Achse (12) umfaßt.

16. Vorrichtung nach einem der Ansprüche 13 bis 15, dadurch gekennzeichnet, daß der Verbindungsteil (23) des zweiten Rahmenelements (6) in der Rinne (26) des ersten Körperabschnitts (8) aufgenommen wird, um einen im allgemeinen L-förmigen Karren zu formen, wobei der zweite Körperabschnitt (10) die tragende Plattform (38) definiert und der erste Körperabschnitt (8) im wesentlichen aufrecht ist.

17. Vorrichtung nach Anspruch 16, dadurch gekennzeichnet, daß der erste Körperabschnitt (8) einen vorspringenden Sicherungsknopf (44) und Ansatz (48) aufweist, der so angeordnet ist, daß er in das Verbindungsteil (23) des Rahmenelements (6) eingreift.

18. Vorrichtung nach Anspruch 16 oder 17, dadurch gekennzeichnet, daß die erste Schenkelbaugruppe (24) des ersten Körperabschnitts (8) verlängert ist, um einen Griff für den Karren zu bilden.

19. Vorrichtung nach Anspruch 16, 17 oder 18, dadurch gekennzeichnet, daR die zweite Schenkelbaugruppe (30) in der Rinne (32) in den Eingriff mit einer Feststellvorrichtung (50) ausgezogen wird, um einen Kippständer für den Karren zu bilden.

20. Vorrichtung nach einem der Ansprüche 16 bis 19, dadurch gekennzeichnet, daß die Lasten auf der Plattform (38) von einem untergelegten Gewichtstragesystem gestützt werden, das die Rahmenelemente (4, 6), die Strebe (16) und die Achse (12) umfaßt.

21. Vorrichtung nach einem der Ansprüche 16 bis 20, dadurch gekennzeichnet, daß die Radvorrichtung (14) eine erste Oberflächenvorrichtung (62) zum Verringern von Reibung, wenn der Karren über harte Flächen gerollt wird, und eine zweite Oberflächenvorrichtung (64) zum Ausschließen eines übermäßigen Einsinkens, wenn der Karren über weiche Oberflächen gerollt wird, aufweist.

22. Vorrichtung nach Anspruch 21, dadurch gekennzeichnet, daß die Rolle (14) zylindrisch ist und die erste Oberflächenvorrichtung schmale Abschnitte (62) aufweist und die zweite Oberflächenvorrichtung breitere konkave Abschnitte (64) zwischen den schmalen Abschnitten aufweist.

23. Vorrichtung nach Anspruch 21 oder 22, dadurch gekennzeichnet, daß die Rolle drei schmale Abschnitte (62) und zwei breitere konkave Abschnitte (64) aufweist.

## Revendications

1. Dispositif (2) comprenant la première partie d'un corps (8) et la deuxième partie d'un corps (10), des roues (14) reliées aux deux parties de ce corps (8,10) et un système à pivot (P1,P2), les parties de ce corps (8,10) étant reliées au système à pivot et capables de tourner autour de ce dernier afin de permettre au dispositif (2) d'adopter une des positions suivantes :
premièrement, une position selon laquelle les deux parties de corps (8,10) sont jointes ensemble afin de former un coffret compact ;
deuxièmement, une position selon laquelle les deux parties de corps (8,10) sont placées dans un plan commun généralement horizontal afin de former une table ; et
troisièmement, une position selon laquelle une des sections du corps se prolonge en formant un angle par rapport à l'autre section de manière à ce que le dispositif accuse une forme généralement en "L", les roues (14) se trouvant sous le dispositif pour le transformer en chariot
caractérisé en ce que les sections d'un corps (8,10) sont reliées à des pieds (24,30,40) qui se trouvent à l'intérieur du coffret compact de la première position, les pieds pouvant être déplacés afin de se trouver dans la deuxième position, selon laquelle ils soutiennent la table sur une surface de support, les roues (14) n'étant pas engagées avec la surface de support.

2. Dispositif selon la Revendication 1, caractérisé en ce que les première, deuxième et troisième positions sont chacune différentes l'une par rapport à l'une des deux autres dans les trois positions.

3. Dispositif qui selon les Revendications 1 ou 2, est caractérisé en ce que le système à pivot inclut des moyens permettant de disposer les sections du corps selon trois positions, ces moyens comprenant les parties (P2,24,30,17) se trouvant dans le coffret, dans le premier cas.

4. Dispositif qui, selon les Revendications 1, 2 ou 3, est caractérisé en ce que la première partie de corps (8) est reliée à un premier élément d'armature (4) qui est relié à un premier pivot (P1) et en ce que la deuxième partie de corps (10) est reliée à un deuxième élément d'armature (6) qui est relié à un deuxième pivot (P2) et en ce qu' un élément de traverse (16) se prolonge à partir du deuxième pivot (P2) jusqu'au premier pivot (P1).

5. Dispositif qui, selon la Revendication 4, est caractérisé en ce que le premier pivot (P1) coïncide avec l'axe (12) des roues (14).

6. Dispositif qui, selon toute Revendication précédente, est caractérisé en ce que les roues (14) comprennent un rouleau (14) adapté de manière à pouvoir être déplacé sur une surface molle, par exemple du sable.

7. Dispositif qui, selon les Revendications 4, 5 ou 6, est caractérisé en ce que le premier élément d'armature (4) inclut un angle en coude (57).

8. Dispositif qui, selon les Revendications de 4 à 7, est caractérisé en ce que chaque élément d'armature (4,6) est relié à la partie de corps (8,10) qui lui correspond en un point intermédiaire de la longueur de cette partie de corps.

9. Dispositif qui, selon l'une des Revendications de 4 à 8, est caractérisé en ce que les éléments d'armature (4,6) sont en forme de U et sont munis de pieds (17,19) respectifs pourvus de moyens respectifs de liaison (21,23) et les extrémités libres des pieds (17) du premier élément d'armature (4) sont reliées au premier pivot (P1) et les extrémités libres des pieds (19) du deuxième élément d'armature (6) sont reliées au deuxième pivot (P2) de manière à ce que l'élément d'armature (4) puisse pivoter autour du premier pivot (P1) dans un sens et que le deuxième élément d'armature (6) puisse pivoter autour du pivot (P1) dans le sens opposé, les parties de corps (8,10) étant ramenées l'une vers l'autre jusqu'à ce que les moyens respectifs de liaison (21,23) se rejoignent afin de former le coffret compact.

10. Dispositif qui, selon la Revendication 9, est caractérisé par un élément de blocage (18) qui bloque les parties de corps (8,10) ensemble.

11. Dispositif qui, selon toute Revendication précédente, est caractérisé en ce qu'un premier ensemble extensible de pieds (24) est relié à la première partie de corps (8) et qu'un deuxième ensemble extensible de pieds (30) est relié à la deuxième partie de corps (10) et, quand on tourne lesdites parties de corps (8,10) autour du pivot (P1) de manière à ce qu'elles se trouvent dans un plan commun généralement horizontal pour former un dessus de table, les ensembles de pieds (24,30) s'étendent afin de former les pieds de la table.

12. Dispositif qui, selon la Revendication 11, est caractérisé par des charnières (28) qui relient le premier ensemble extensible de pieds (24) au premier élément d'armature (4) et des charnières (34) qui relient le deuxième ensemble extensible de pieds (30) au deuxième élément d'armature (6).

13. Dispositif qui, selon les Revendications 11 ou 12, est caractérisé en ce que la première et dite deuxième parties de corps (8,10) comprennent des cannelure (26,32) munies d'arrêts respectifs (39,50) près d'une des extrémités, les ensembles extensibles de pieds (24,30) pouvant se mouvoir dans les cannelures respectives (26,32) et être bloquées dans une position étendue avec l'aide des arrêts (39,50) et des charnières (28,34).

14. Dispositif qui, selon l'une des Revendications de 1 à 8 et de 11 à 13, est caractérisé en ce que les parties de corps (8,10) sont munies de pièces latérales (65,67) qui se rejoignent en un angle perpendiculaire à la surface plane du dessus de la table (38,46) pour en augmenter la stabilité.

15. Dispositif qui, selon toute Revendication de 11 à 14, est caractérisé en ce que le dessus de la table est soutenu par un système sous-jacent triangulaire de support de poids qui inclut les sections de corps (8,10), les éléments d'armature (4,6), la traverse (16) et l'axe (12).

16. Dispositif qui, selon toute Revendication de 13à 15, est caractérisé en ce que le moyen de liaison (23) du deuxième élément d'armature (6) est placé dans la cannelure (26) de la première partie de corps (8) pour former un chariot qui a la forme générale d'un L, la deuxième partie de corps (10) définissant la plate-forme portant la charge (38) et la première partie de corps (8) se trouvant essentiellement verticale.

17. Dispositif qui, selon la Revendication 16, est caractérisé en ce que la première partie de corps (8) inclut un bouton d'arrêt (44) et une patte (48) disposés de manière à engager le moyen de liaison (23) de l'élément d'armature (6).

18. Dispositif qui selon les Revendications 16 ou 17, est caractérisé en ce que le premier ensemble de pieds (24) de la première partie de corps (8) s'étend de manière à définir une poignée pour le chariot.

19. Dispositif qui, selon les Revendications 16, 17 ou 18, est caractérisé, en ce que le deuxième ensemble de pieds (30) s'étend dans la cannelure (32) pour s'engager avec un arrêt (50) afin de définir une béquille d'arrêt pour le chariot.

20. Dispositif qui, selon toute Revendication de 16 à 19, est caractérisé en ce que les charges de la plate-forme (38) sont soutenues par un système sous-jacent de support de poids qui inclut les éléments d'armature (4,6), la traverse (16) et l'axe (12).

21. Dispositif qui, selon toute Revendication de 16 à 20, est caractérisé en ce que les roues (14) comprennent une première surface (62) permettant de réduire la friction quand le chariot roule sur des surfaces dures et une deuxième surface (64) pour éviter que le chariot ne s'enfonce de trop lorsqu'il roule sur une surface molle.

22. Dispositif qui, selon la Revendication 21, est caractérisé en ce que le rouleau (14) est de forme cylindrique et que la première surface comprend des parties étroites (62) et qu'une deuxième surface comprend des parties concaves (64) entre les parties étroites.

23. Dispositif qui, selon les Revendications 21 ou 22, est caractérisé en ce que le rouleau comprend trois parties étroites (62) et deux parties concaves plus larges (64).
